# EUROPEAN PATENT SPECIFICATION

(11) **EP 2 271 857 B1**
(45) Date of publication and mention of the grant of the patent: **03.04.2013**
(21) Application number: 09744714.8
(22) Date of filing: 14.10.2009
(51) Int. Cl.: F16H 1/22, F16H 3/095

(54) **GEARBOX WITH LOAD DISTRIBUTION SYSTEM**
GETRIEBE MIT LEISTUNGSVERZWEIGUNG
BOÎTE DE VITESSES À SYSTÈME DE DISTRIBUTION DE CHARGE

(30) Priority: 20.10.2008 GB 0819233; 22.04.2009 GB 0906907
(43) Date of publication of application: 12.01.2011
(73) Proprietor: Smart Manufacturing Technology Ltd., Nottingham NG1 6BB (GB)
(72) Inventor: ZHOU, Changxiu c/o Smart Manufacturing Technology Ltd., Nottingham NG1 6BB (GB)
(74) Representative: Charig, Raymond Julian
(86) International application number: PCT/GB2009/002446
(87) International publication number: WO 2010/046621

(56) References cited:
- GB-A- 814 905
- GB-A- 2 044 391
- US-A- 1 740 756
- US-A- 4 709 590
- US-A- 4 754 665
- US-B1- 6 334 368

## Description

### Field of the Invention

The invention relates to gearboxes for converting the torque and speed of a source of rotational power, such as an engine or other motor.

### Background

Gearboxes are commonly used in motor vehicles to allow the engine to run within its operating limits whilst allowing for variations in road speed. Pairs of gears in gearboxes are typically designed with backlash to allow for mechanical tolerances between the gears and thermal expansion of the gear teeth. If a small amount of backlash is not designed for, the gearbox is at risk of seizing under certain conditions.

The arrangement of a particular type of known gearbox, for example as described in US 4,754,665, is illustrated schematically in figure 1. This type of gearbox takes input rotational power from an input shaft 9 and transmits this to a pair of lay shafts 7 and 8 (also known as countershafts) via a head gear set 15. The lay shafts 7, 8 transmit power to a series of gears 18, 19 on the main shaft 10 via either gear set 16 or 17. The gears 18, 19 on the main shaft 10 rotate freely and are clutched for selective engagement with the main shaft by means of clutches 23 or 24. When a gear is clutched, power is transmitted to the main shaft for the particular gear ratio represented by the relevant pairs of gears.

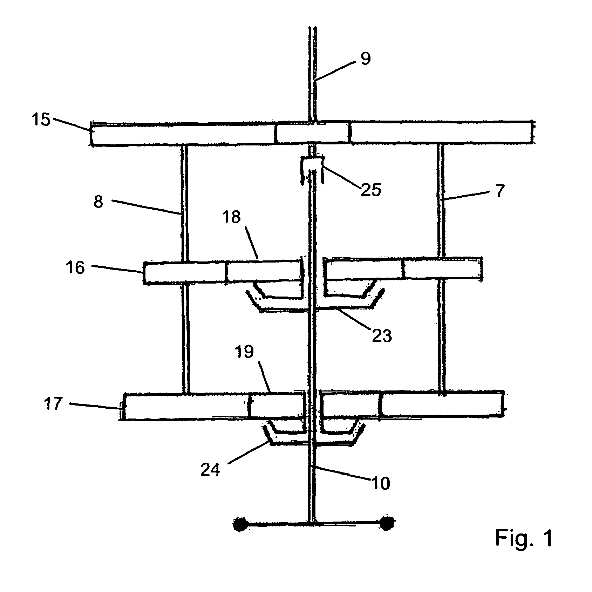

The arrangement illustrated in figure 1 has an inherent problem, which is that of ensuring that torque is distributed evenly through each lay shaft, and not just through the one which meshes first. Previous solutions to this problem, as for example disclosed in US 4,754,665, involve allowing the clutched gears to float and one end 25 of the main shaft to move. Radial translation of the clutched gears 18, 19, i.e. in a direction perpendicular (orthogonal) to the axis of its rotation represented by the axis of the main shaft 10, allows for a more even meshing between the selected clutched gear 18, 19 and the corresponding gears on the lay shafts 16, 17 in contact with the clutched gear.

Replacing the clutches 23, 24 with synchronisers would make changing gear a simpler procedure, as the rotational speeds of the gears do not need to be closely matched before engagement. However, the nature of the floating relationship between the gears 18, 19 on the main shaft would make such a modification difficult, due to the close tolerances required for the synchronisers to engage correctly. Use of synchronisers would therefore risk causing the gearbox to seize, due to the aforementioned problem relating to mechanical tolerances between gears.

It is consequently an aim of the invention to address the above mentioned problem.

US 1,740,756 , showing the features of the preamble of claim 1, discloses a power transmission gear comprising two pinions each directly actuated from a power source and each axially movable independently of the other, a wheel having two engagement tracks, one of said tracks being in engagement with the other pinion, a final transmission pinion driven by said wheel and another wheel connected to the driven element and driven by said final transmission pinion.

### Summary of the invention

In accordance with the invention there is provided a gearbox as defined in the appended claims.

An advantage of the above gearbox is that load sharing between the lay shafts is automatically achieved when power is being transmitted through the gearbox, and without the need to use clutches on the output shaft. The gears on the lay shafts and output shaft can be continuously meshed and any small misalignment due to machining tolerances can be accommodated through movement of the first and second input gears.

The first and second helical input gears may be formed as a single unit or from separate gears.

The second helical input gear may optionally comprise two gears disposed along the input shaft on opposing sides of the first gear.

The gearbox is preferably configured to share load equally between the first and second lay shafts, for example by means of the first and second helical input gears having substantially equal and opposite helix gear angles. Other load sharing ratios may, however, also be possible, for example by selection of unequal helix gear angles.

The output shaft of the gearbox is preferably co-axially mounted with respect to the input shaft.

The gearbox optionally comprises a synchroniser mounted on the output shaft and configured to selectively engage an output gear with corresponding gears on the lay shafts for transmission of power via the selected output gear.

The first and second input gears are preferably mounted for axial movement with respect to the input shaft, such that the first and second gears can move along the input shaft in response to an imbalance in load sharing between the lay shafts.

The gearbox may further comprise third and fourth helical input gears of opposite hand mounted on the input shaft, the third and fourth helical gears fixed axially relative to each other and axially moveable in tandem,
wherein the input gears on the lay shafts are first lay shaft input gears and each lay shaft comprises a second lay shaft input gear such that the first lay shaft is selectively engageable with the third input gear but not the fourth input gear and the second lay shaft is selectively engageable with the fourth input gear but not the third input gear.

Each lay shaft optionally comprises a synchronizer mounted thereon and configured to synchronously selectively engage the lay shafts with the first and second input gears or with the third and fourth input gears.

The invention ensures continuous meshing of all engaged gears in a different way to the previously disclosed gearboxes, not least through eliminating the need for any out of axis motion of the main shaft, or for the clutched gears to float. The invention therefore allows for the straightforward use of synchronisers on the main shaft. Furthermore, the invention ensures the lay shafts have the optimum division of load between them, which would typically be a 50:50 ratio, although other ratios may be desired and designed for. The assured load sharing thereby allows all the gears on the lay shafts to be reduced in specification, and hence the size, weight of the gearbox to be reduced. Alternatively, a gearbox of the same size in accordance with the invention can be rated at a higher power.

### Detailed Description

The invention will now be described by way of example, and with reference to the enclosed drawings in which:
figure 1 is a schematic cross-sectional diagram of a known gearbox arrangement;
figure 2 is a schematic cross-sectional diagram of a gearbox;
figure 3 is a schematic cross-sectional diagram of an alternative arrangement for the input gears of a gearbox according to the invention; and
figure 4 is a schematic cross-sectional diagram of an embodiment of the invention.

The gearbox illustrated in figure 1 has already been discussed above in relation to the background to the invention.

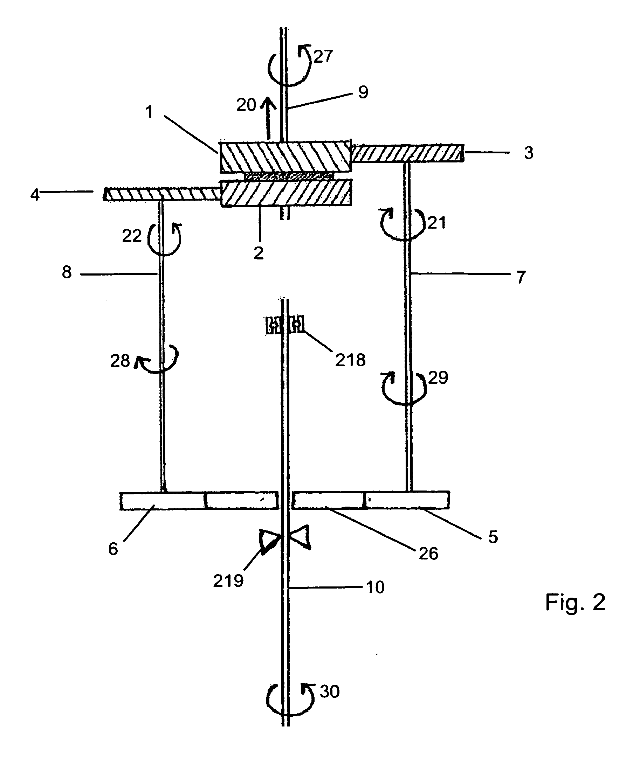

Illustrated in figure 2 is a gearbox comprising two helical gears 1, 2 of opposite hand, the gears being mounted on an input shaft 9 fur rotation by an input power source. These input gears 1, 2 are free to move axially, but are constrained to move in tandem, both axially and rotationally. The gears may be constrained by, for example, manufacturing the pair of gears as a single unit, or by connecting the two gears together by bolts, screws, welds, or ether connecting means. A set distance between the two input gears 1, 2 can be zero or greater. Where this distance is non-zero, the gap between this gears may be maintained by a rigid material inserted between the gears, mounted for example on the input shaft 9.

Meshing of helical gears tends to cause an opposing axial force, which will be roughly proportional to the transmitted torque. The opposite hand of the input helical gears 1, 2 will therefore result in axial movement of the gears 1, 2 when the opposing axial forces are not balanced. Axial movement of the gears will tend to produce a small rotation in the pair of gears they mesh with. This rotation will tend to bring the under-loaded gear train into closer contact, and reduce contact on the over-loaded gear train, thus balancing the load between the lay shafts 7, 8 until the resultant opposing axial forces are in balance. For an equal load on the lay shafts 7, 8, an equal helix angle on the input gears 1, 2 would be selected. For a design of gearbox requiring an unequal load on the lay shafts, the input helix gears 1, 2 would have differing helix angles so as to produce the designed-for load distribution.

The input shaft 9 has the two helical input gears 1, 2 of opposite hand mounted thereon, which are constrained to rotate with the shaft 9, but allowed to move along part of the length of the input shaft 9. This could be achieved by the use of a spline to ensure the easy movement of the gears along the length of their travel. Gears 3, 4, 5, 6 on the lay shafts 7, 8 are mounted normally on the lay shafts 7, 8. Axial movement of the lay shaft gears 3, 4, 5, 6 is prevented, and the gears are constrained to rotate with the shaft on which they are mounted, so as to transmit power from input gear 3 to output gear 5 on the first lay shaft 7, and from input gear 4 to output gear 6 on the second lay shaft 8. Output gear 26 is mounted on bearings on the main shaft 10, and can be synchronised by means of a synchroniser 219 to transmit power to the main shaft 10. In the embodiment illustrated in figure 2, the main shaft 10 is axially constrained at each end, with its movement constrained by means of a bearing 218 mounted at one end of the shaft 10. During synchronisation, if lay shaft gear 6 comes into gear tooth contact with output gear 26 first, all power will initially be transmitted through the left lay shaft 8. If the input shaft 9 is rotating in the direction indicated by arrow 27, the lay shafts 7, 8 will be caused to rotate in the directions indicated by arrows 28, 29, and the main shaft in the direction Indicated by arrow 30. As all the power is momentarily transmitted through the left lay shaft 8, there is a reactionary force on gear 2, pushing the Input gears 1, 2 upwards along the input shaft 9 in the direction indicated by arrow 20. This upwards movement causes both lay shaft gears 3, 4 to rotate slightly relative to their original position. This slight rotation, indicated by arrows 21, 22, is carried down the respective lay shafts 7, 8. The direction of rotation 21 will take the teeth of lay shaft gear 5 closer to the teeth of output gear 26, and rotation 22 will take teeth of lay shaft gear 6 teeth out of immediate contact with teeth of the output gear 26. As a result, through axial movement of the input gears 1, 2, and subsequent rotations of the lay shafts 7, 8, contact between gears 5, 6 and 26 will tend to be equalised, causing the distribution of load through gear trains to vary.

A gearbox in accordance with the example shown in figure 2 will typically have two or more sets of output gears and corresponding lay shaft gears, to allow selection of a range of gearing ratios between the input and output shafts 9, 10. One or more synchronisers 219 may be provided, so as to allow selection of one of the gearing ratios. A synchroniser may be provided for each set of output gears. Alternatively, one or more two-way synchronisers may be provided that are configured to select between two adjacent output gear sets.

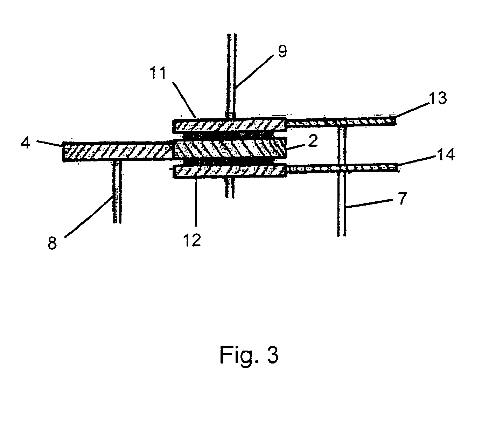

Figure 3 shows an alternative solution for the input gears according to an embodiment of the invention in which one of the input gears is divided into two, resuming in input gears 11, 12 of opposite hand to input gear 2. Input gear 2 is preferably double the width of gears 11, 12. This arrangement of input gears will tend to balance out any uneven bending moment on the lay shafts 7, 8 that would otherwise be present in the embodiment shown in figure 2.

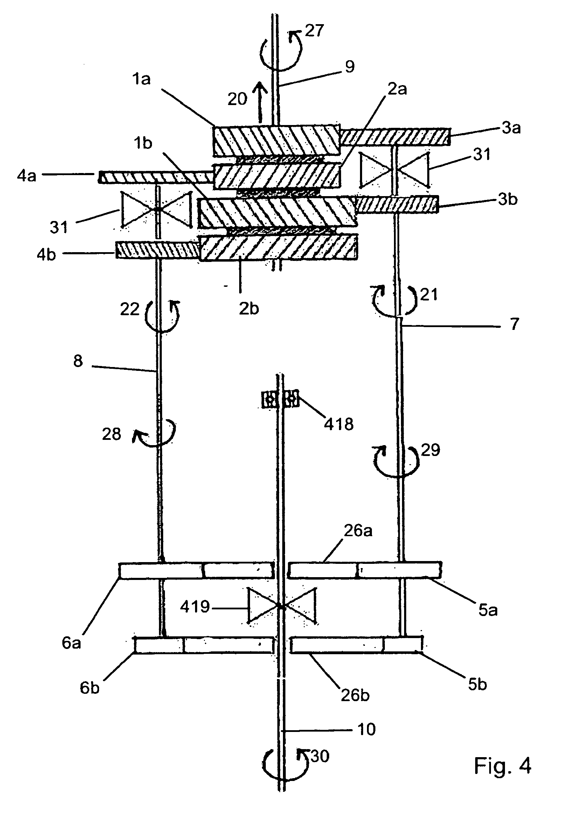

Figure 4 illustrates an embodiment of the invention, in which third and fourth input gears 1b, 2b are provided on the input shaft 9, in addition to first and second input gears 1a, 2a described above. This configuration allows an additional range selection by selection of which set of input gears is engaged with the lay shafts 7, 8. Selection is preferably achieved by means of one or more synchronisers 31 provided on each lay shaft 7, 8. The synchronisers 31, which are configured to operate simultaneously, may be 'two-way' synchronisers, in that a selection can be made between the first input gears 3a, 4a on the lay shafts 7, 8 and the second input gears 3b, 4b on the lay shafts 7, 8. The principles of operation of the embodiment of figure 4 are otherwise the same as for the other embodiments described above. In particular, the third and fourth Input gears 1b, 2b are also of opposite hand and are mounted on the input shaft to allow for axial movement in tandem. The third and fourth input gears 1 b, 2b are moveable Independent of the first and second input gears 1a, 2a, so that load sharing between the lay shafts is enabled on selection of either pair of gears.

An alternative embodiment to that shown in figure 4 can comprise a synchroniser mounted on the input shaft 9 and configured to Simultaneously selectively engage the input shaft 9 with the lay shafts 7, 8 via either the first and second input gears 1a, 2a or via the third and fourth gears 1b, 2b.

Figure 4 also illustrates an exemplary output stage of the gearbox, in which two output gears 26a, 26b are shown, the output gears being selectable by means of a further synchroniser 419 configured to selectively engage either the first or the second output gear 26a, 26b with corresponding output gears 5a, 5b, 6a, 6b on the lay shafts 7, 8. This arrangement would also be suitable for the example shown in figure 2.

A gearbox according to the above described embodiments would allow four gearing ratios to be selected, depending on the selection of the input gears and output gears.

Other embodiments are intentionally within the scope of the invention as defined by the appended claims.

## Claims

1. A gearbox comprising:
an input shaft (9) having first (11, 12; 1a, 1 b) and second helical input gears (2; 2a, 2b) of opposite hand fixed axially relative to each other and axially moveable in tandem;
an output shaft (10);
first and second lay shafts (7, 8) offset from the axis of the input shaft (9) and configured to engage with the input and output shafts (9, 10) for transmitting rotational movement from the input shaft (9) tc the output shaft (10), each lay shaft (7, 8) comprising a lay shaft input gear (3a, 4a) such that the first lay shaft (7) engages with the first helical input gear (11, 12; 1a, 1b) but not the second helical input gear (2; 2a, 2b) and the second lay shaft (8) engages with the second helical input gear (2; 2a, 2b) but not the first helical input gear (11, 12; 1a, 1b); and
two or more output gears (26a, 26b) rotatably mounted on the output shaft (10), the output gears (26a, 26b) being in continuous mesh with corresponding lay shaft output gears (5a, 6a, 5b, 6b) on the first and second lay shafts (7, 8),
wherein the gearbox is configured such that an imbalance in load sharing between the input shaft (9) and the first and second lay shafts (7, 8) when the output shaft (10) is engaged with the first and second lay shafts (7, 8) results in axial movement of the first (11, 12; 1a, 1 b) and second input gears (2; 2a, 2b) tending to reduce the imbalance,
**characterised in that**:
axial movement of the lay shaft input and output gears (3a, 4a, 5a, 6a, 5b, 6b) is prevented; and
the two or more output gears (26a, 26b) are selectively engageable with the output shaft (10) and respective lay shaft output gears (5a, 6a; 5b, 6b) on corresponding lay shafts (7, 8) to allow selection of a range of gearing ratios between the input and output shafts (9, 10).

2. The gearbox of claim 1 wherein the first and second helical input gears (1a, 2a) are formed as a single unit.

3. The gearbox of claim 1 wherein the first (11, 12; 1a, 1b) and second helical input gears (2; 2a, 2b) are formed from separate gears.

4. The gearbox of claim 1 wherein the first helical input gear (11, 12; 1a, 1b) comprises two gears (11, 12) disposed along the input shaft (9) on opposing sides of the second helical input gear (2).

5. The gearbox of claim 1 wherein the gearbox is configured to share load equally between the first and second lay shafts (7, 8).

6. The gearbox of claim 5 wherein the first and second helical input gears (1a, 2a) have equal and opposite helix gear angles.

7. The gearbox of claim 1 wherein the output shaft (10) is co-axially mounted with respect to the input shaft (9).

8. The gearbox of claim 1 comprising a synchroniser (219; 419) mounted on the output shaft (10) and configured to selectively engage one of the two or more output gears (26a, 26b) with corresponding lay shaft output gears (5a, 6a; 5b, 6b) for transmission of power via the selected one of the two or more output gears (26a, 26b).

9. The gearbox of any preceding claim wherein the first and second helical Input gears (1a, 2a) are mounted for axial movement with respect to the input shaft (9).

10. The gearbox of any preceding claim comprising third and fourth helical input gears (1b, 2b) of opposite hand mounted on the input shaft (9), the third and fourth helical gears (1b, 2b) fixed axially relative to each other and axially moveable in tandem,
wherein the input gears on the lay shafts (7, 8) are first lay shaft input gears (3a, 4a) and each lay shaft (7, 8) comprises a second lay shaft input gear (3b, 4b) such that the first lay shaft (7) is selectively engageable with the third input gear (1b) but not the fourth input gear (2b) and the second lay shaft (8) is selectively engageable with the fourth input gear (4b) but not the third input gear (3b).

11. The gearbox of claim 10 wherein each lay shaft (7, 8) comprises a synchronizer (31) mounted thereon and configured to simultaneously selectively engage the lay shafts (7, 8) with the first and second helical input gears (1a, 2a) or with the third and fourth helical input gears (1b, 2b).

12. The gearbox of claim 10 wherein the input shaft (9) comprises a synchronizer mounted thereon and configured to simultaneously selectively engage the input shaft (9) with the first and second helical input gears (1a, 2a) or with the third and fourth helical input gears (1b, 2b).

## Patentansprüche

1. Getriebe, umfassend:
eine Eingangswelle (9), die erste (11, 12; 1a, 1b) und zweite entgegengesetzt gängige, schrägverzahnte Eingangszahnräder (2; 2a, 2b) aufweist, die axial relativ zueinander befestigt und hintereinander axial bewegbar sind;
eine Ausgangswelle (10);
erste und zweite Vorgelegewellen (7, 8), die von der Achse der Eingangswelle (9) versetzt und so konfiguriert sind, dass sie mit den Eingangs- und Ausgangswellen (9, 10) in Eingriff kommen, um Drehbewegung von der Eingangswelle (9) zu der Ausgangswelle (10) zu übertragen, wobei jede Vorgelegewelle (7,8) ein Vorgelegewellen-Eingangszahnrad (3a, 4a) so umfasst, dass die erste Vorgelegewelle (7) mit dem ersten schrägverzahnten Eingangszahnrad (11, 12; 1a, 1b), jedoch nicht mit dem zweiten schrägverzahnten Eingangszahnrad (2; 2a, 2b) in Eingriff kommt, und die zweite Vorgelegewelle (8) mit dem zweiten schrägverzahnten Eingangszahnrad (2; 2a, 2b), jedoch nicht mit dem ersten schrägverzahnten Eingangszahnrad (11, 12; 1a, 1b) in Eingriff kommt; und
zwei oder mehr Ausgangszahnräder (26a, 26b), die drehbar auf der Ausgangswelle (10) angebracht sind, wobei die Ausgangszahnräder (26a, 26b) in kontinuierlichem Eingriff mit entsprechenden Vorgelegewellen-Ausgangszahnrädern (5a, 6a, 5b, 6b) auf den ersten und zweiten Vorgelegewellen (7, 8) stehen,
wobei das Getriebe so konfiguriert ist, dass eine Unwucht in der Lastverteilung zwischen der Eingangswelle (9) und den ersten und zweiten Vorgelegewellen (7, 8), wenn die Ausgangswelle (10) mit den ersten und zweiten Vorgelegewellen (7, 8) in Eingriff gebracht ist, zu einer axialen Bewegung der ersten (11, 12; 1a, 1b) und zweiten Eingangszahnräder (2; 2a, 2b) führt, wodurch dazu tendiert wird, die Unwucht zu verringern,
**dadurch gekennzeichnet, dass**
die axiale Bewegung der Vorgelegewellen-Eingangs- und Vorgelegewellen-Ausgangszahnräder (3a, 4a, 5a, 6a, 5b, 6b) verhindert wird; und
die zwei oder mehreren Ausgangszahnräder (26a, 26b) selektiv mit der Ausgangswelle (10) und jeweiligen Vorgelegewellen-Ausgangszahnrädern (5a, 6a; 5b, 6b) auf entsprechenden Vorgelegewellen (7,8) in Eingriff gebracht werden können, um eine Auswahl eines Bereichs von Übersetzungsverhältnissen zwischen den Eingangs- und Ausgangswellen (9, 10) zu ermöglichen.

2. Getriebe gemäß Anspruch 1, bei dem die ersten und zweiten schrägverzahnten Eingangszahnräder (1a, 2a) als eine einzelne Einheit gebildet sind.

3. Getriebe gemäß Anspruch 1, bei dem die ersten (11, 12; 1a, 1b) und zweiten schrägverzahnten Eingangszahnräder (2; 2a, 2b) aus getrennten Zahnrädern gebildet sind.

4. Getriebe gemäß Anspruch 1, bei dem das erste schrägverzahnte Eingangszahnrad (11, 12; 1a, 1b) zwei Zahnräder (11, 12) umfasst, die entlang der Eingangswelle (9) auf gegenüberliegenden Seiten des zweiten schrägverzahnten Eingangszahnrads (2) angeordnet sind.

5. Getriebe gemäß Anspruch 1, bei dem das Getriebe so konfiguriert ist, dass die Last gleichmäßig zwischen den ersten und zweiten Vorgelegewellen (7, 8) verteilt wird.

6. Getriebe gemäß Anspruch 5, bei dem die ersten und zweiten schrägverzahnten Eingangszahnräder (1a, 2a) gleiche und entgegengesetzte Zahnradschrägungswinkel aufweisen.

7. Getriebe gemäß Anspruch 1, bei dem die Ausgangswelle (10) in Bezug auf die Eingangswelle (9) koaxial angebracht ist.

8. Getriebe gemäß Anspruch 1, das eine Synchronisiervorrichtung (219; 419) umfasst, die auf der Ausgangswelle (10) angebracht und so konfiguriert ist, dass eines der zwei oder mehreren Ausgangszahnräder (26a, 26b) mit entsprechenden Vorgelegewellen-Ausgangszahnrädern (5a, 6a; 5b, 6b) selektiv in Eingriff gebracht wird, um Leistung mittels dem ausgewählten einen der zwei oder mehreren Ausgangszahnräder (26a, 26b) zu übertragen.

9. Getriebe gemäß einem vorhergehenden Anspruch, bei dem die ersten und zweiten schrägverzahnten Eingangszahnräder (1a, 2a) zur axialen Bewegung in Bezug auf die Eingangswelle (9) angebracht sind.

10. Getriebe gemäß einem vorhergehenden Anspruch, das dritte und vierte entgegengesetzt gängige, schrägverzahnte Eingangszahnräder (1b, 2b) umfasst, die auf der Eingangswelle (9) angebracht sind, wobei die dritten und vierten schrägverzahnte Zahnräder (1b, 2b) axial relativ zueinander befestigt und hintereinander axial bewegbar sind,
wobei die Eingangszahnräder auf den Vorgelegewellen (7, 8) erste Vorgelegewellen-Eingangszahnräder (3a, 4a) sind und jede Vorgelegewelle (7, 8) ein zweites Vorgelegewellen-Eingangszahnrad (3b, 4b) so umfasst, dass die erste Vorgelegewelle (7) mit dem dritten Eingangszahnrad (1b), jedoch nicht mit dem vierten Eingangszahnrad (2b) selektiv in Eingriff gebracht werden kann, und die zweite Vorgelegewelle (8) mit dem vierten Eingangszahnrad (4b), jedoch nicht mit dem dritten Eingangszahnrad (3b) selektiv in Eingriff gebracht werden kann.

11. Getriebe gemäß Anspruch 10, bei dem jede Vorgelegewelle (7, 8) eine Synchronisiervorrichtung (31) umfasst, die darauf angebracht und so konfiguriert ist, dass gleichzeitig die Vorgelegewellen (7, 8) mit den ersten und zweiten schrägverzahnten Eingangszahnrädern (1a, 2a) oder mit den dritten und vierten schrägverzahnten Eingangszahnrädern (1b, 2b) selektiv in Eingriff gebracht werden.

12. Getriebe gemäß Anspruch 10, bei dem die Eingangswelle (9) eine Synchronisiervorrichtung umfasst, die darauf angebracht und so konfiguriert ist, dass gleichzeitig die Eingangswelle (9) mit den ersten und zweiten schrägverzahnten Eingangszahnrädern (1a, 2a) oder mit den dritten und vierten schrägverzahnten Eingangszahnrädern (1b, 2b) selektiv in Eingriff gebracht wird.

## Revendications

1. Boîte de vitesses comprenant :
un arbre d'entrée (9) comportant des premier (11, 12 ; 1a, 1b) et deuxième (2 ; 2a, 2b) pignons d'entrée hélicoïdaux de sens opposés, fixes axialement l'un par rapport à l'autre et mobiles axialement en tandem ;
un arbre de sortie (10) ;
des premier et second arbres intermédiaires (7, 8) décalés par rapport à l'axe de l'arbre de sortie (9) et configurés pour entrer en prise avec les arbres d'entrée et de sortie (9, 10) pour transmettre un mouvement rotatif de l'arbre de sortie (9) à l'arbre de sortie (10), chaque arbre intermédiaire (7, 8) comprenant un pignon d'entrée d'arbre intermédiaire (3a, 4a) de sorte que le premier arbre intermédiaire (7) entre en prise avec le premier pignon d'entrée hélicoïdal (11, 12 ; 1a, 1b) mais n'entre pas en prise avec le deuxième pignon d'entrée hélicoïdal (2 ; 2a, 2b) et le second arbre intermédiaire (8) entre en prise avec le deuxième pignon d'entrée hélicoïdal (2 ; 2a, 2b) mais n'entre pas en prise avec le premier pignon d'entrée hélicoïdal (11, 12 ; 1a, 1b) ; et
deux, ou plus, pignons de sortie (26a, 26b) montés de façon rotative sur l'arbre de sortie (10), les pignons de sortie (26a, 26b) étant en engrènement continu avec des pignons de sortie d'arbre intermédiaire correspondants (5a, 6a, 5b, 6b) sur les premier et second arbres intermédiaires (7, 8),
dans laquelle la boîte de vitesses est configurée de sorte qu'un déséquilibre de partage de charge entre l'arbre de sortie (9) et les premier et second arbres intermédiaires (7, 8) lorsque l'arbre de sortie (10) est en prise avec les premier et second arbres intermédiaires (7, 8) entraîne un mouvement axial des premier (11, 12 ; 1a, 1b) et deuxième (2 ; 2a, 2b) pignons d'entrée ayant tendance à réduire le déséquilibre,
**caractérisée en ce que** :
le mouvement axial des pignons d'entrée et de sortie d'arbre intermédiaire (3a, 4a, 5a, 6a, 5b, 6b) est empêché ; et
les deux, ou plus, pignons de sortie (26a, 26b) peuvent entrer sélectivement en prise avec l'arbre de sortie (10) et des pignons de sortie d'arbre intermédiaire respectifs (5a, 6a ; 5b, 6b) sur des arbres intermédiaires correspondants (7, 8) pour permettre la sélection d'une plage de rapports de démultiplication entre les arbres d'entrée et de sortie (9, 10).

2. Boîte de vitesses selon la revendication 1, dans laquelle les premier et deuxième pignons d'entrée hélicoïdaux (1a, 2a) sont une même entité.

3. Boîte de vitesses selon la revendication 1, dans laquelle les premier (11, 12 ; 1a, 1b) et second (2 ; 2a, 2b) pignons d'entrée hélicoïdaux sont formés à partir de pignons séparés.

4. Boîte de vitesses selon la revendication 1, dans laquelle le premier pignon d'entrée hélicoïdal (11, 12 ; 1a, 1b) comprend deux pignons (11, 12) disposés le long de l'arbre de sortie (9) sur des côtés opposés du deuxième pignon d'entrée hélicoïdal (2).

5. Boîte de vitesses selon la revendication 1, dans laquelle la boîte de vitesses est configurée pour partager une charge de façon égale entre les premier et second arbres intermédiaires (7, 8).

6. Boîte de vitesses selon la revendication 5, dans laquelle les premier et deuxième pignons d'entrée hélicoïdaux (1a, 2a) présentent des angles d'hélice de pignon égaux et opposés.

7. Boîte de vitesses selon la revendication 1, dans laquelle l'arbre de sortie (10) est monté de façon coaxiale par rapport à l'arbre de sortie (9).

8. Boîte de vitesses selon la revendication 1, comprenant un synchroniseur (219 ; 419) monté sur l'arbre de sortie (10) et configuré pour mettre sélectivement en prise un des deux, ou plus, pignons de sortie (26a, 26b) avec des pignons de sortie d'arbre intermédiaire correspondants (5a, 6a ; 5b, 6b) pour la transmission de puissance par l'intermédiaire du pignon sélectionné parmi les deux, ou plus, pignons de sortie (26a, 26b).

9. Boîte de vitesses selon une quelconque revendication précédente, dans laquelle les premier et deuxième pignons d'entrée hélicoïdaux (1a, 2a) sont montés pour un mouvement axial par rapport à l'arbre de sortie (9).

10. Boîte de vitesses selon une quelconque revendication précédente, comprenant des troisième et quatrième pignons d'entrée hélicoïdaux (1b, 2b) de sens opposé montés sur l'arbre de sortie (9), les troisième et quatrième pignons hélicoïdaux (1b, 2b) étant fixes axialement l'un par rapport à l'autre et mobiles axialement en tandem,
dans laquelle les pignons d'entrée sur les arbres intermédiaires (7, 8) sont des premiers pignons d'entrée d'arbre intermédiaire (3a, 4a) et chaque arbre intermédiaire (7, 8) comprend un second pignon d'entrée d'arbre intermédiaire (3b, 4b) de sorte que le premier arbre intermédiaire (7) puisse entrer sélectivement en prise avec le troisième pignon d'entrée (1b) mais n'entre pas en prise avec le quatrième pignon d'entrée (2b) et que le second arbre intermédiaire (8) puisse entrer sélectivement en prise avec le quatrième pignon d'entrée (4b) mais n'entre pas en prise avec le troisième pignon d'entrée (3b).

11. Boîte de vitesses selon la revendication 10, dans laquelle chaque arbre intermédiaire (7, 8) comprend un synchroniseur (31) monté sur celui-ci et configuré pour simultanément mettre sélectivement en prise les arbres intermédiaires (7, 8) avec les premier et deuxième pignons d'entrée hélicoïdaux (1a, 2a) ou avec les troisième et quatrième pignons d'entrée hélicoïdaux (1b, 2b).

12. Boîte de vitesses selon la revendication 10, dans laquelle l'arbre de sortie (9) comprend un synchroniseur monté sur celui-ci et configuré pour simultanément mettre sélectivement en prise l'arbre de sortie (9) avec les premier et deuxième pignons d'entrée hélicoïdaux (1a, 2a) ou avec les troisième et quatrième pignons d'entrée hélicoïdaux (1b, 2b).
